(19) Europäisches Patentamt
European Patent Office
Office européen des brevets

(11) **EP 1 182 796 A1**

(12) **EUROPEAN PATENT APPLICATION**
published in accordance with Art. 158(3) EPC

(43) Date of publication:
**27.02.2002 Bulletin 2002/09**

(51) Int Cl.7: **H04B 1/707**, H04B 7/26, H04B 7/02

(21) Application number: **01915821.1**

(22) Date of filing: **27.03.2001**

(86) International application number:
**PCT/JP01/02459**

(87) International publication number:
**WO 01/73966 (04.10.2001 Gazette 2001/40)**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **28.03.2000 JP 2000089361**

(71) Applicant: **MATSUSHITA ELECTRIC INDUSTRIAL CO., LTD.**
**Kadoma-shi, Osaka 571-8501 (JP)**

(72) Inventor: **TODA, Takashi**
**Ishikawa-gun, Ishikawa 921-8824 (JP)**

(74) Representative:
**Grünecker, Kinkeldey, Stockmair & Schwanhäusser Anwaltssozietät**
**Maximilianstrasse 58**
**80538 München (DE)**

(54) **WIRELESS RECEIVER AND METHOD OF WIRELESS RECEPTION**

(57) A phase estimation section 102 obtains a phase estimate value of a received signal, a normalization section 104 normalizes phase estimate values so that the sum of the sizes of the phase estimate values is 1, a phase correction section 103 corrects the phase of a received signal using the normalized phase estimate value, a combining section 105 performs RAKE combination of signals with corrected phases, an RSSI measurement section 108 measures the RSSI using the RAKE-combined signal, and an ISSI measurement section 109 measures the ISSI using the RAKE-combined signal. Also, a multiplication section 106 multiplies the RAKE-combined signal by the sum of the phase estimate values, and an error correction section 107 performs error correction on a signal multiplied by the sum of the phase estimate values.

FIG. 2

**Description**

Technical Field

The present invention relates to a radio receiving apparatus and radio receiving method.

Background Art

In recent years there has been a remarkable increase in the demand for terrestrial mobile communications such as mobile telephones, and technologies for using frequencies efficiently have become important in order to secure greater subscriber capacity in a limited frequency band.

The CDMA method is drawing attention as one multiple access method for using frequencies efficiently. The CDMA method is a multiple access method using spread spectrum technology that is characterized by not being easily affected by multipath distortion.

In communications by means of the CDMA method, a characteristic is that diversity effects can also be expected due to the use of RAKE reception.

Also, in communications by means of the CDMA method, transmission power control is implemented to solve the so-called near-far problem. Transmission power control is carried out based on the SIR (Signal to Interference Ratio), RSSI (Received Signal Strength Indicator), ISSI (Interference Signal Strength Indicator), or the like. Therefore, it is extremely important to measure the SIR, RSSI, and ISSI accurately on the receiving side.

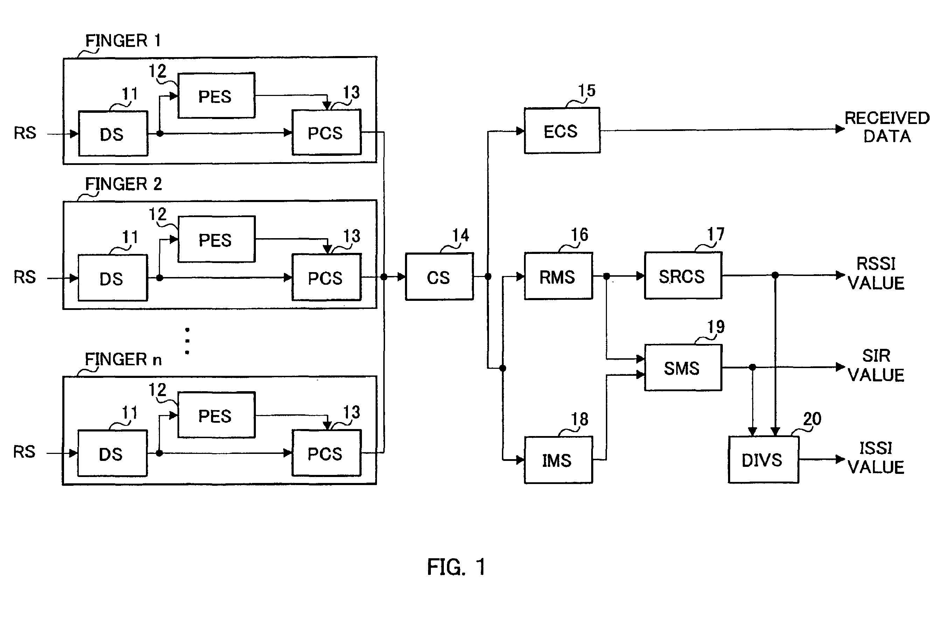

A conventional radio receiving apparatus that performs RAKE reception will be described below. FIG.1 is a main block diagram showing the outline configuration of a conventional radio receiving apparatus. In FIG.1, fingers 1 through n are composed of a despreading section 11, a phase estimation section 12, and a phase correction section 13.

The despreading section 11 performs despreading processing on a received signal, and outputs signal $d_{corr}$ ($l,m,n$) shown in Equation (1).

$$d_{corr}(l,m,n)=S(l,m,n)+I(l,m,n)$$

$$=S(l,n,n)e^{j(\theta(m,n)+\phi(l,m,n))}+I(l,m,n)e^{j\nu(l,m,n)} \quad\quad (1)$$

Equation (1) shows the despread signal of the m'th slot and n'th symbol of the first finger. S denotes the amplitude of the desired signal, I the noise amplitude, $\theta$ (m,n) the modulation phase, $\varphi$ (l,m,n) the sum of phase fluctuation on the transmission path and phase difference that occurs during transmission/reception, and $\nu$(l,m,n) the noise phase, respectively.

The phase estimation section 12 obtains phase estimate value $\xi$ shown in Equation (2).

$$\xi(l,m) = \frac{1}{N_p}\sum_{n=0}^{N_p-1}\mathbf{d}_{corr}e^{-j\theta(m,n)} \quad\quad \cdots (2)$$

$N_p$ denotes the number of pilot symbols. Phase estimate value $\xi$ can be obtained by correcting the modulation phase amount of a received pilot symbol.

Alternatively, as shown in Equation (3), the phase estimation section 12 may also establish phase estimate value $\xi$ by weighting the phase estimate value obtained using Equation (2) by a in a plurality of slots ( in Equation (3), a total of 2K slots), and then averaging them.

$$\xi(l,m) = \frac{1}{2K}\sum_{m'=m-K+1}^{m+K}\alpha(m')\xi(l,m') \quad\quad \cdots (3)$$

The phase correction section 13 performs phase correction by performing complex multiplication of despread signal $d_{corr}$ shown in Equation (1) and the complex conjugate $\xi'^*$ of phase estimate value $\xi$ shown in Equation (2) or (3). Thus, signal $d_{cohe}$ output from fingers 1 through n is as shown in Equation (4).

$$d_{cohe}(l,m,n)=d_{corr}(l,m,n)\xi^*(l,m)$$

$$=|\xi^*(l,m)|S(l,m,n)e^{j(\theta(m,n)+\phi(l,m,n)-\psi(l,m))}$$

$$+|\xi^*(l,m)|I(l,m,n)e^{j(\nu(l,m,n)-\psi(l,m))} \tag{4}$$

Also, at the same time as phase correction is performed according to Equation (4), weighting is performed with the average reception amplitude.

A combining section 14 adds together signals $d_{cohe}$ output from fingers 1 through n shown by Equation (4). The combined signal $d_{rake}$ is as shown in Equation (5).

$$\mathbf{d}_{rake}(l,m,n) = \sum_{l=0}^{N_L-1}\mathbf{d}_{cohe}(l,m,n)$$

$$= \sum_{l=0}^{N_L-1}\left|\xi^*(l,m)\right|S(l,m,n)e^{j(\theta(m,n)+\phi(l,m,n)-\psi(l,m))} \quad \cdots (5)$$

$$+ \sum_{l=0}^{N_L-1}\left|\xi^*(l,m)\right|I(l,m,n)e^{j(\nu(l,m,n)-\psi(l,m))}$$

$N_L$ denotes the number of fingers. As signals $d_{cohe}$ output from fingers 1 through n have already been weighted with an average reception amplitude, combined signal $d_{rake}$ is a RAKE-combined signal. Receive data is obtained by having error correction performed by an error correction section 15 on this RAKE-combined signal $d_{rake}$.

Also, an RSSI measurement section 16 measures the RSSI according to Equation (6) using RAKE-combined signal $d_{rake}$.

$$RSSI(m) = \left|\mathbf{d}_{average}(m)\right|^2$$

$$= \left|\frac{1}{N_p}\sum_{n=0}^{N_p-1}\mathbf{d}_{rake}(m,n)e^{-j\theta(m,n)}\right|^2 \quad \cdots (6)$$

Equation (6) shows the RSSI of the m'th slot.

A square root computation section 17 obtains the square root of the RSSI measured by the RSSI measurement section 16. By this means, the RSSI value is obtained.

In addition, an ISSI measurement section 18 measures the ISSI according to Equation (7) using RAKE-combined signal $d_{rake}$.

$$ISSI(m) = \frac{1}{N_p}\sum_{n=0}^{N_p-1}\left|\mathbf{d}_{rake}(m,n) - \mathbf{d}_{average}(m)\right|^2 \quad \cdots (7)$$

Equation (7) shows the ISSI of the m'th slot.

An SIR measurement section 19 measures the SIR by obtaining the ratio of the RSSI measured by the RSSI measurement section 16 to the ISSI measured by the ISSI measurement section 18, and outputs the SIR value.

A division section 20 obtains the ISSI value by dividing the output of the square root computation section 17 by the output of the SIR measurement section 19, and outputs it.

Thus, in a conventional radio receiving apparatus, the RSSI is measured according to Equation (6) and the ISSI is measured according to Equation (7), using signal $d_{rake}$ obtained using Equation (5). Also, the SIR is measured using the RSSI measured according to Equation (6) and the ISSI measured according to Equation (7).

Here, in a conventional radio receiving apparatus, since the RAKE-combined signal $d_{rake}$ is a signal weighted by the average reception amplitude as shown in Equation (5), the dimension of $d_{rake}$ is the two dimension . Therefore, when RSSI and ISSI measurements are carried out according to Equation (6) and Equation (7) using $d_{rake}$ obtained according to Equation (5), the dimension of the RSSI and the dimension of the ISSI are the four dimension.

However, the dimension of the RSSI and ISSI must be originally the dimension of the power (that is, the two dimension). Thus, in a conventional radio receiving apparatus, the dimension of the RSSI and ISSI is adjusted to the two dimension by obtaining the square root of the measured RSSI.

However, in the above-described conventional radio receiving apparatus, signals $d_{cohe}$ output from fingers 1 through n are normally signals on which weighting has been performed with a different value at each finger.

Consequently, in the above-described conventional radio receiving apparatus, even though the dimension of the RSSI and ISSI is matched to the dimension of power by means of a square root computation, it is not possible to measure the RSSI and ISSI accurately. Moreover, since the SIR is measured using the RSSI measured according to Equation (6) and the ISSI measured according to Equation (7), it is not possible to measure the SIR accurately. Therefore,in the above-described conventional radio receiving apparatus, the accuracy of transmission power control is poor.

Disclosure of Invention

It is an object of the present invention to provide a radio receiving apparatus and radio receiving method that enable reception quality to be measured accurately even when RAKE combination is carried out on a received signal.

In order to achieve this object, with the present invention phase correction and weighting of RAKE combination are performed using a normalized phase estimate value.

Brief Description of Drawings

FIG.1 is a main block diagram showing the outline configuration of a conventional radio receiving apparatus;
FIG.2 is a main block diagram showing the outline configuration of a radio receiving apparatus according to Embodiment 1 of the present invention;
FIG.3 is a main block diagram showing the outline configuration of a radio receiving apparatus according to Embodiment 2 of the present invention; and
FIG.4 is a main block diagram showing the outline configuration of a radio receiving apparatus according to Embodiment 3 of the present invention;

Best Mode for Carrying out the Invention

With reference now to the accompanying drawings, embodiments of the present invention will be explained in detail below.

(Embodiment 1)

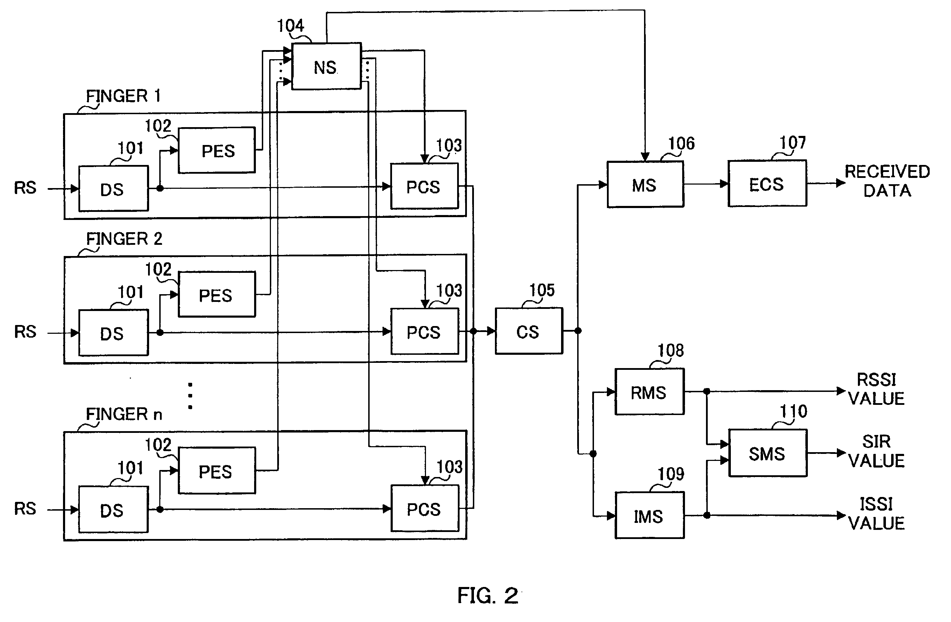

A radio receiving apparatus according to Embodiment 1 of the present invention will be described using FIG. 2. FIG.2 is a main block diagram showing the outline configuration of a radio receiving apparatus according to Embodiment 1 of the present invention.

In FIG.2, fingers 1 through n are composed of a despreading section 101, a phase estimation section 102, and a phase correction section 103.

The despreading section 101 performs despreading processing on a received signal. The phase estimation section 102 obtains a phase estimate value. The phase correction section 103 performs phase correction on a despread signal.

A normalization section 104 normalizes the phase estimate value obtained at each finger. A combining section 105 adds together the signals output from fingers 1 through n.

A multiplication section 106 multiplies the RAKE-combined signal by a predetermined value obtained during the course of normalization processing. An error correction section 107 performs error correction on the signal output from the multiplication section 106.

An RSSI measurement section 108 measures the RSSI, an ISSI measurement section 109 measures the ISSI, and an SIR measurement section 110 measures the SIR.

Next, the operation of a radio receiving apparatus with the above-described configuration will be described. First, despreading processing is carried out on a received signal by the despreading section 101, and signal $d_{corr}$(l,m, n) shown in Equation (8) is output to the phase estimation section 102 and phase correction section 103.

$$d_{corr}(l,m,n)=S(l,m,n)+I(l,m,n)$$

$$=S(l,n,n)e^{j(\theta(m,n)+\phi(l,m,n))}+I(l,m,n)e^{j\nu(l,m,n)} \tag{8}$$

Equation (8) shows the despread signal of the m'th slot and n' th symbol of the first finger. S denotes the amplitude of the desired signal, I the noise amplitude, $\theta$ (m,n) the modulation phase, $\varphi$ (l,m,n) the sum of phase fluctuation on the transmission path and phase difference that occurs during transmission/reception, and $\nu$(l,m,n) the noise phase, respectively.

The phase estimation section 102 then obtains phase estimate value $\xi$ shown in Equation (9), output the value $\xi$ to the normalization section 104.

$$\xi(l,m)=\frac{1}{N_p}\sum_{n=0}^{N_p-1}d_{corr}e^{-j\theta(m,n)} \quad \cdots \ (9)$$

Np denotes the number of pilot symbols. Phase estimate value $\xi$ can be obtained by correcting the modulation phase amount of a received pilot symbol.

Alternatively, as shown in Equation (10), the phase estimation section 102 may also establish phase estimate value $\xi$ by weighting the phase estimate value obtained using Equation (9) by a in a plurality of slots ( in Equation (10), a total of 2K slots), and then averaging them.

$$\xi(l,m)=\frac{1}{2K}\sum_{m'=m-K+1}^{m+K}\alpha(m')\xi(l,m') \quad \cdots \ (10)$$

Next, the phase estimate value output from each finger is normalized by the normalization section 104. The normalization section 104 performs normalization using Equation (11), so that the sum of the sizes of the phase estimate values of all the fingers is 1.

$$\xi'(l,m)=\frac{\xi(l,m)}{\sum_{l=0}^{N_L-1}|\xi(l,m)|} \quad \cdots \ (11)$$

Normalized phase estimate value $\xi^*$ is output to the phase correction section 103.

Also, the normalization section 104 outputs to the multiplication section 106 the value $\beta$(m) shown in Equation (12) that is obtained in the course of normalization processing.

$$\beta(m)=\sum_{l=0}^{N_L-1}|\xi(l,m)| \quad \cdots \ (12)$$

Next, phase correction is carried out by having complex multiplication performed on despread signal $d_{corr}$ and the complex conjugate $\xi'^*$ of normalized phase estimate value $\xi'$ by the phase correction section 103. Therefore, signals $d_{cohe}$ output from fingers 1 through n are as shown in Equation (13).

$$\mathbf{d}_{cohe}(l,m,n) = \mathbf{d}_{corr}(l,m,n)\xi^*(l,m)$$

$$= \frac{\xi^*(l,m)}{\sum_{l=0}^{N_L-1}\left|\xi(l,m)\right|}\left\{S(l,n,n)e^{j(\theta(m,n)+\phi(l,m,n))} + I(l,m,n)e^{jv(l,m,n)}\right\} \quad \cdots (13)$$

Next, signals $d_{cohe}$ output from fingers 1 through n shown in Equation (13) are added together and RAKE-combined as shown in Equation (14) by a combining section 105. $N_L$ denotes the number of fingers.

$$\mathbf{d}_{rake}(l,m,n) = \sum_{l=0}^{N_L-1}\mathbf{d}_{cohe}(l,m,n)$$

$$= \sum_{l=0}^{N_L-1}\left[\frac{\xi^*(l,m)}{\sum_{l=0}^{N_L-1}\left|\xi(l,m)\right|}\left\{S(l,n,n)e^{j(\theta(m,n)+\phi(l,m,n))} + I(l,m,n)e^{jv(l,m,n)}\right\}\right] \quad \cdots (14)$$

RAKE-combined signal $d_{rake}$ is output to the multiplication section 106, RSSI measurement section 108, and ISSI measurement section 109.

In the multiplication section 106, each symbol of the signal output from the combining section 105 is multiplied by value β(m) output from the normalization section 104, and the result is output to the error correction section 107. By having this multiplication performed, a signal input to the error correction section 107 becomes the same value as a signal input to the error correction section 15 in the above-described conventional radio receiving apparatus.

Then error correction is performed on the signal output from the multiplication section 106 by the error correction section 107. By this means, receive data is obtained.

Also, the RSSI measurement section 108 measures the RSSI according to Equation (15) using RAKE-combined signal $d_{rake}$. Equation (15) shows the RSSI of the m'th slot.

$$RSSI(m) = \left|\mathbf{d}_{average}(m)\right|^2$$

$$= \left|\frac{1}{N_p}\sum_{n=0}^{N_p-1}\mathbf{d}_{rake}(m,n)e^{-j\theta(m,n)}\right|^2 \quad \cdots (15)$$

The measured RSSI is output to a later-stage component part that performs transmission power control, etc., and to the SIR measurement section 110.

Meanwhile, the ISSI measurement section 109 measures the ISSI according to Equation (16) using RAKE-combined signal $d_{rake}$. Equation (16) shows the ISSI of the m'th slot.

$$ISSI(m) = \frac{1}{N_p}\sum_{n=0}^{N_p-1}\left|\mathbf{d}_{rake}(m,n) - \mathbf{d}_{average}(m)\right|^2 \quad \cdots (16)$$

The measured ISSI is output to a later-stage component part that performs transmission power control, etc., and to the SIR measurement section 110.

Then the SIR is measured by the SIR measurement section 110 by obtaining the ratio of the RSSI measured by the RSSI measurement section 108 to the ISSI measured by the ISSI measurement section 109. The measured SIR is output to a later-stage component part that performs transmission power control, etc.

Thus, according to a radio receiving apparatus of this embodiment, phase correction and weighting of RAKE combination are carried out using a normalized phase estimate value, and therefore even when RAKE combination is performed on a received signal, it is possible to obtain a RAKE-combined signal at the dimension of amplitude. Consequently, according to a radio receiving apparatus of this embodiment, the RSSI, ISSI, and SIR can be measured at the dimension of power, and therefore the RSSI, ISSI, and SIR can be measured accurately even when RAKE combination is performed on a received signal.

Also, according to a radio receiving apparatus of this embodiment, a RAKE-combined signal obtained at the dimension of amplitude is multiplied by the divisor $\beta(m)$ used when obtaining a phase estimate value, and therefore the signal input to the error correction section can be made the same value as the signal input to the error correction section in the above-described conventional radio receiving apparatus. Thus, according to a radio receiving apparatus of this embodiment, error correction processing in which complex processing is performed can be carried out with the same method as conventionally, enabling the time and cost necessary for equipment development to be reduced.

In this embodiment, it is also possible for the normalization section 104 to perform normalization using Equation (17) on the phase estimate value output from each finger, and to have the sum of the sizes of the phase estimate values of all fingers be $N_L$.

$$\xi'(l,m) = \frac{\xi(l,m)}{\dfrac{1}{N_L}\displaystyle\sum_{l=0}^{N_L-1}\left|\xi(l,m)\right|} \qquad \cdots \ (1\,7)$$

In this case, the multiplication section 106 multiplies each symbol of the RAKE-combined signal by the value $\beta(m)$ shown in Equation (18) that is obtained in the course of normalization processing.

$$\beta(m) = \frac{1}{N_L}\sum_{l=0}^{N_L-1}\left|\xi(l,m)\right| \qquad \cdots \ (1\,8)$$

Thus, by performing normalization using Equation (17), it is possible to measure an RSSI and ISSI that reflect the number of signals that are combined.

(Embodiment 2)

A radio receiving apparatus according to Embodiment 2 of the present invention has almost the same configuration as Embodiment 1, but differs in that a RAKE-combined signal is divided by the sum of pre-normalization phase estimate values.

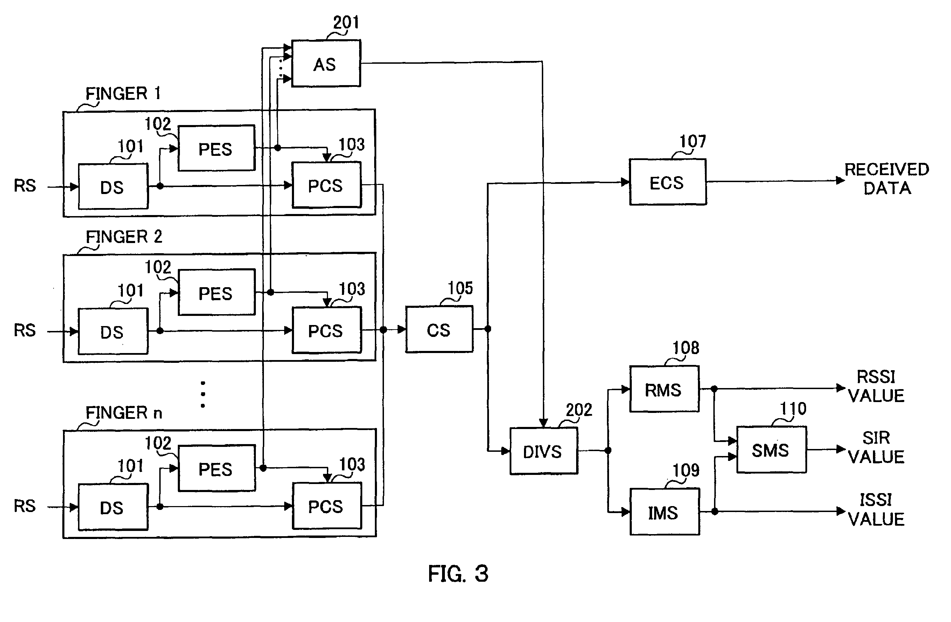

A radio receiving apparatus according to Embodiment 2 of the present invention will be described below using FIG.3. FIG.3 is a main block diagram showing the outline configuration of a radio receiving apparatus according to Embodiment 2 of the present invention. Parts in FIG.3 identical to those in Embodiment 1 are assigned the same reference numbers and their detailed explanations are omitted.

An adding section 201 obtains the sum of the phase estimate values output from all fingers. A division section 202 divides a RAKE-combined signal by the sum of the phase estimate values.

Next, the operation of a radio receiving apparatus with the above-described configuration will be described. Phase correction is carried out by having complex multiplication performed by the phase correction section 103 on despread signal $d_{corr}$ output from the despreading section 101 and the complex conjugate $\xi^*$ of normalized phase estimate value $\xi$ output from the phase estimation section 102. Therefore, signals $d_{cohe}$ output from fingers 1 through n are as shown in Equation (19).

$$d_{cohe}(l,m,n) = d_{corr}(l,m,n)\xi^*(l,m)$$

$$= |\xi^*(l,m)|S(l,m,n)e^{j(\theta(m,n)+\phi(l,m,n)-\psi(l,m))}$$

$$+ |\xi^*(l,m)|I(l,m,n)e^{j(\nu(l,m,n)-\psi(l,m))} \qquad (19)$$

The adding section 201 obtains the sum β(m) of phase estimates value ξ output from the phase estimation sections 102, as shown in Equation (20), and outputs it to the division section 202.

$$\beta(m) = \sum_{l=0}^{N_L-1} |\xi(l,m)| \quad \cdots (20)$$

The division section 202 divides RAKE-combined signal $d_{rake}$ by the sum β(m) of phase estimate values ξ. Division is performed only for symbols subject to RSSI, ISSI, and SIR measurement.

By this means, the RAKE-combined signal is a signal equivalent to the RAKE-combined signal in Embodiment 1. That is, the signal output from the division section 202 is a signal equivalent to a RAKE-combined signal after phase correction has been carried out using a normalized phase estimate value.

Thus, according to a radio receiving apparatus of this embodiment, instead of RAKE-combining signals that have undergone phase correction using a normalized phase estimate value, a RAKE-combined signal is divided by the sum of pre-normalization phase estimate values, and therefore it is possible to obtain a RAKE-combined signal at the dimension of amplitude while keeping the configuration of each finger the same as in the above-described conventional radio receiving apparatus. Thus, according to a radio receiving apparatus of this embodiment, the RSSI, ISSI, and SIR can be measured accurately without changing the configuration of each finger from that in the above-described conventional radio receiving apparatus. Thus, according to a radio receiving apparatus of this embodiment, the time and cost necessary for equipment development can be reduced.

Also, according to a radio receiving apparatus of this embodiment, division is performed only for symbols subject to RSSI, ISSI, and SIR measurement, enabling the amount of computation to be reduced compared with Embodiment 1.

In this embodiment, the adding section 201 may also obtain the sum β(m) of phase estimate values ξ as shown in Equation (21).

$$\beta(m) = \frac{1}{N_L} \sum_{l=0}^{N_L-1} |\xi(l,m)| \quad \cdots (21)$$

By using Equation (21) to obtain the sum β(m) of phase estimate values ξ in this way, it is possible to measure an RSSI and ISSI that reflect the number of signals that are combined.

(Embodiment 3)

A radio receiving apparatus according to Embodiment 3 of the present invention has almost the same configuration as Embodiment 2, but differs in that division processing is performed after the RSSI and ISSI have been measured using a RAKE-combined signal.

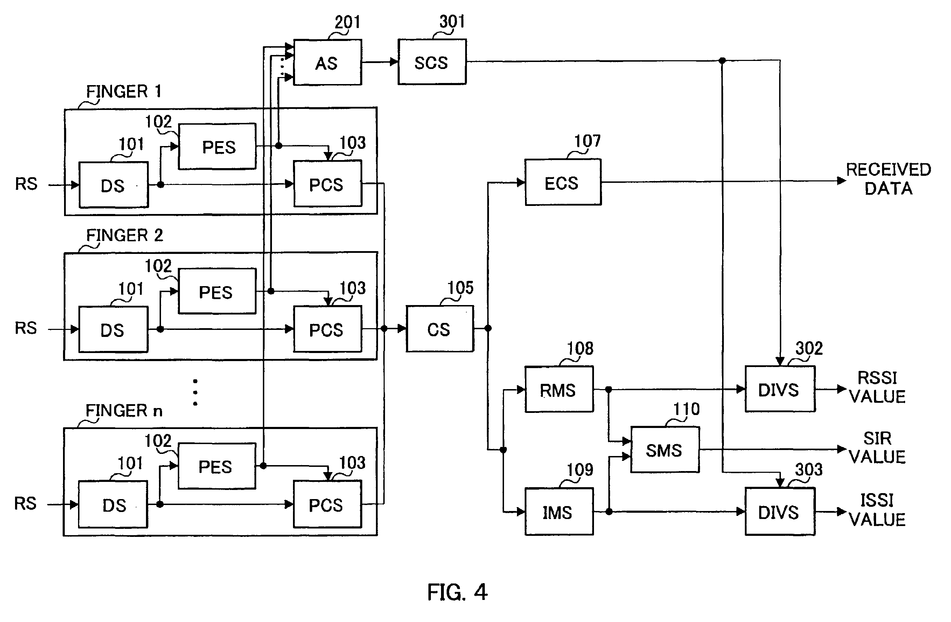

A radio receiving apparatus according to Embodiment 3 of the present invention will be described below using FIG.4. FIG.4 is a main block diagram showing the outline configuration of a radio receiving apparatus according to Embodiment 3 of the present invention. Parts in FIG.4 identical to those in Embodiment 2 are assigned the same reference numbers and their detailed explanations are omitted.

A square computing section 301 obtains the square of the sum of phase estimate values. A division section 302 divides a measured RSSI by the square of the sum of phase estimate values. A division section 303 divides a measured ISSI by the square of the sum of phase estimate values.

Next, the operation of a radio receiving apparatus with the above-described configuration will be described. The sum β(m) of phase estimate values ξ obtained by the adding section 201 is output to the square computing section 301.

The square computing section 301 obtains the square of β(m) and outputs it to division section 302 and division section 303.

Division section 302 divides the RSSI measured by the RSSI measurement section 108 by the square of β(m), and division section 303 divides the ISSI measured by the ISSI measurement section 109 by the square of β(m). By this means, RSSI and ISSI are corrected.

Thus, according to a radio receiving apparatus of this embodiment, instead of RAKE-combining signals that have undergone phase correction using a normalized phase estimate value, division processing is performed after the RSSI and ISSI have been measured using a RAKE-combined signal, and therefore it is possible to achieve the equivalent of obtaining a RAKE-combined signal at the dimension of amplitude while keeping the configuration of each finger the same as in the above-described conventional radio receiving apparatus. Thus, according to a radio receiving apparatus of this embodiment, the RSSI, ISSI, and SIR can be measured accurately without changing the configuration of each finger from that in the above-described conventional radio receiving apparatus. Thus, according to a radio receiving apparatus of this embodiment, the time and cost necessary for equipment development can be reduced.

As explained above, according to the present invention it is possible to measure reception quality accurately even when RAKE combination is performed on a received signal.

This application is based on Japanese Patent Application No. 2000-89361 filed on March 28, 2000, entire content of which is expressly incorporated by reference herein.

Industrial Applicability

The present invention is applicable to a base station apparatus used in a radio communication system, or a communication terminal apparatus such as a mobile station apparatus that performs radio communication with this base station apparatus. When the present invention is applied, reception quality can be measured at the dimension of power in a communication terminal apparatus and base station apparatus, enabling reception quality to be measured accurately even when RAKE combination is performed on a received signal.

**Claims**

1. A radio receiving apparatus comprising:

   an estimator for obtaining a phase estimate value of a received signal;
   a normalizer for normalizing the phase estimate value;
   a corrector for correcting the phase of the received signal using the normalized phase estimate value;
   a combiner for combining signals with corrected phases; and
   a measurer for measuring reception quality using the combined signal.

2. The radio receiving apparatus according to claim 1, further comprising:

   a calculator for obtaining the sum of phase estimate values; and
   a multiplier for multiplying the combined signal by the sum;

   wherein said normalizer normalizes the phase estimate values so that the sum of the sizes of the phase estimate values is 1.

3. The radio receiving apparatus according to claim 1, further comprising:

   a calculator for obtaining a value obtained by dividing a sum of phase estimate values by the number of signals that are combined; and
   a multiplier for multiplying the combined signal by the value;

   wherein said normalizer normalizes the phase estimate values so that the sum of the sizes of the phase estimate values is the number of the signals that are combined.

4. A radio receiving apparatus comprising:

   an estimator for obtaining a phase estimate value of a received signal;
   a corrector for correcting the phase of the received signal using the phase estimate value;
   a combiner for combining signals with corrected phases;
   a calculator for obtaining a predetermined value;
   a divider for dividing the combined signal by the predetermined value; and
   a measurer for measuring reception quality using the divided signal.

5. The radio receiving apparatus according to claim 4, wherein said calculator makes the sum of phase estimate values the predetermined value.

6. The radio receiving apparatus according to claim 4, wherein said calculator makes the value obtained by dividing the sum of phase estimate values by the number of signals that are combined the predetermined value.

7. A radio receiving apparatus comprising:

an estimator for obtaining a phase estimate value of a received signal;
a corrector for correcting the phase of the received signal using the phase estimate value;
a combiner for combining signals with corrected phases;
a calculator for obtaining a predetermined value;
a measurer for measuring reception quality using the combined signal; and
a divider for dividing a value indicating the reception quality by the predetermined value.

8. The radio receiving apparatus according to claim 7, wherein said calculator makes the value obtained by squaring the sum of phase estimate values the predetermined value.

9. The radio receiving apparatus according to claim 7, wherein said calculator makes the value squared after being obtained by dividing the sum of phase estimate values by the number of signals that are combined the predetermined value.

10. A communication terminal apparatus equipped with a radio receiving apparatus, said radio receiving apparatus comprising:

an estimator for obtaining a phase estimate value of a received signal;
a normalizer for normalizing the phase estimate value;
a corrector for correcting the phase of the received signal using the normalized phase estimate value;
a combiner for combining signals with corrected phases; and
a measurer for measuring reception quality using the combined signal.

11. A communication terminal apparatus equipped with a radio receiving apparatus, said radio receiving apparatus comprising:

an estimator for obtaining a phase estimate value of a received signal;
a corrector for correcting the phase of the received signal using the phase estimate value;
a combiner for combining signals with corrected phases;
a calculator for obtaining a predetermined value;
a divider for dividing the combined signal by the predetermined value; and
a measurer for measuring reception quality using the divided signal.

12. A communication terminal apparatus equipped with a radio receiving apparatus, said radio receiving apparatus comprising:

an estimator for obtaining a phase estimate value of a received signal;
a corrector for correcting the phase of the received signal using the phase estimate value;
a combiner for combining signals with corrected phases;
a calculator for obtaining a predetermined value; ' a measurer for measuring reception quality using the combined signal; and
a divider for dividing a value indicating the reception quality by the predetermined value.

13. A base station apparatus equipped with a radio receiving apparatus, said radio receiving apparatus comprising:

an estimator for obtaining a phase estimate value of a received signal;
a normalizer for normalizing the phase estimate value;
a corrector for correcting the phase of the received signal using the normalized phase estimate value;
a combiner for combining signals with corrected phases; and
a measurer for measuring reception quality using the combined signal.

14. A base station apparatus equipped with a radio receiving apparatus, said radio receiving apparatus comprising:

an estimator for obtaining a phase estimate value of a received signal;
a corrector for correcting the phase of the received signal using the phase estimate value;
a combiner for combining signals with corrected phases;
a calculator for obtaining a predetermined value;
a divider for dividing the combined signal by the predetermined value; and
a measurer for measuring reception quality using the divided signal.

**15.** A base station apparatus equipped with a radio receiving apparatus, said radio receiving apparatus comprising:

an estimator for obtaining a phase estimate value of a received signal;
a corrector for correcting the phase of the received signal using the phase estimate value;
a combiner for combining signals with corrected phases;
a calculator for obtaining a predetermined value;
a measurer for measuring reception quality using the combined signal; and
a divider for dividing a value indicating the reception quality by the predetermined value.

**16.** A radio receiving method comprising:

an estimating step of obtaining a phase estimate value of a received signal;
a normalizing step of normalizing the phase estimate value;
a correcting step of correcting the phase of the received signal using the normalized phase estimate value;
a combining step of combining signals with corrected phases; and
a measuring step of measuring reception quality using the combined signal.

**17.** A radio receiving method comprising:

an estimating step of obtaining a phase estimate value of a received signal;
a correcting step of correcting the phase of the received signal using the phase estimate value;
a combining step of combining signals with corrected phases;
a calculating step of obtaining a predetermined value;
a dividing step of dividing the combined signal by the predetermined value; and
a measuring step of measuring reception quality using the divided signal.

**18.** A radio receiving method comprising:

an estimating step of obtaining a phase estimate value of a received signal;
a correcting step of correcting the phase of the received signal using the phase estimate value;
a combining step of combining signals with corrected phases;
a calculating step of obtaining a predetermined value;
a measuring step of measuring reception quality using the combined signal; and
a dividing step of dividing a value indicating the
reception quality by the predetermined value.

FIG. 1

FIG. 2

FIG. 3

FIG. 4

EP 1 182 796 A1

# EP 1 182 796 A1

**INTERNATIONAL SEARCH REPORT**

| International application No. |
| --- |
| PCT/JP01/02459 |

**A. CLASSIFICATION OF SUBJECT MATTER**
Int.Cl⁷ H04B1/707, H04B7/26, H04B7/02

According to International Patent Classification (IPC) or to both national classification and IPC

**B. FIELDS SEARCHED**

Minimum documentation searched (classification system followed by classification symbols)
Int.Cl⁷ H04B1/69-1/713, H04J13/00-13/06,
H04B17/00, H04B7/26, H04B7/02

Documentation searched other than minimum documentation to the extent that such documents are included in the fields searched
Jitsuyo Shinan Koho      1926-1996     Toroku Jitsuyo Shinan Koho   1994-2001
Kokai Jitsuyo Shinan Koho   1971-2001    Jitsuyo Shinan Toroku Koho   1996-2001

Electronic data base consulted during the international search (name of data base and, where practicable, search terms used)
JOIS

**C. DOCUMENTS CONSIDERED TO BE RELEVANT**

| Category* | Citation of document, with indication, where appropriate, of the relevant passages | Relevant to claim No. |
| --- | --- | --- |
| Y | JP, 10-233756, A (Kokusai Electric Co., Ltd.), 02 September, 1998 (02.09.98), | 1,10,13,16 |
| A | page 2, Column 2, line 10 to page 3, Column 4, line 21; Figs. 3, 4    (Family: none) | 2-9,11,12, 14,15,17,18 |
| Y | JP, 2000-49662, A (NEC Corp.), 18 February, 2000 (18.02.00), | 1,10,13,16 |
| A | Full text; Figs. 4, 7 & EP, 978950, A2 | 2-9,11,12, 14,15,17,18 |
| A | EP, 969604, A2 (Texas Instruments Incorporated), 05 January, 2000 (05.01.00), Fig. 1 & JP, 2000-49700, A & KR, 2000011422, A | 1-18 |
| A | JP, 11-2651, A (Nippon Telegr. & Teleph. Corp. <NTT>), 06 January, 1999 (06.01.99), Fig. 10    (Family: none) | 1-18 |
| A | JP, 11-274982, A (Sony Corporation), 08 October, 1999 (08.10.99), Fig. 1 | 1-18 |

☒ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 08 June, 2001 (08.06.01) | 19 June, 2001 (19.06.01) |

| Name and mailing address of the ISA/ Japanese Patent Office | Authorized officer |
| --- | --- |
| Facsimile No. | Telephone No. |

Form PCT/ISA/210 (second sheet) (July 1992)

16

**EP 1 182 796 A1**

| INTERNATIONAL SEARCH REPORT | International application No. |
|---|---|
| | PCT/JP01/02459 |

C (Continuation).   DOCUMENTS CONSIDERED TO BE RELEVANT

| Category* | Citation of document, with indication, where appropriate, of the relevant passages | Relevant to claim No. |
|---|---|---|
| | & EP, 945995, A2    & CN, 1234656, A<br>& KR, 99078221, A | |
| A | JP, 11-150761, A (Nippon Denki Ido Tsushin K.K.),<br>02 June, 1999 (02.06.99)<br>& JP, 3123961, B2 | 1-18 |

Form PCT/ISA/210 (continuation of second sheet) (July 1992)

17